# EUROPEAN PATENT APPLICATION

(11) **EP 0 992 936 A2**
(43) Date of publication of application: **12.04.2000**
(21) Application number: 99115490.7
(22) Date of filing: 05.08.1999
(51) Int. Cl.: G06K 11/08

(54) **Optical computer pointing device**

(30) Priority: 06.10.1998 US 167009
(71) Applicant: Hewlett-Packard Company, Palo Alto, California 94304 (US)
(72) Inventor: Badyal, Rajeev, Fort Collins, CO 80526 (US); Morris, Donald E., Fort Collins, CO 80526 (US)
(74) Representative: Schoppe, Fritz, Dipl.-Ing.

(57) **Abstract**

Movement of a mouse (1) or joy stick (16) is detected by optically tracking with a navigation sensor (7, 23) the change in position of the micro-texture on a ball (3, 18) instead of using the ball to actuate shaft encoders. The interior of the mouse or joy stick is an optically controlled environment where the external ambient illumination is excluded, the angle, and intensity of a desired illumination (5, 21) is established once, and the only surface to be imaged and tracked is a part of the ball. As the ball rotates a portion of the old image passes from view as a new portion emerges. Consecutive images are represented internally within the optical tracking mechanism as arrays of pixels, and the tracking mechanism tolerates the disappearance of some pixels along one side of the field of view whilst other pixel appear from the other side of the field of view. Pattern matching of unchanged pixels determines movement. The pattern described by the new pixels need not have any relationship whatsoever to that represented by the disappearing pixels. That is, the ball need not have either a known or a precision pattern upon its surface; the surface can have an arbitrary micro-texture. Any wear and tear to the ball, or dirt that gets on it, simply appears as micro-texture to the optical tracking mechanism. Since the micro-texture is expected to be arbitrary anyway, these phenomenon are of little concern, so long as they do not mechanically interfere with the motion of the ball.

## Description

### Reference to Related Applications

The subject matter disclosed and claimed herein is related to the subject matter of the preceding Patent Application: "SEEING EYE" MOUSE FOR A COMPUTER SYSTEM, Serial No. 09/052,046, filed on 30 April 1998 by Gary B. Gordon, et al. and assigned to Hewlett-Packard Co. That Application in turn incorporates (among others) U.S. Patent 5,644,139 issued 1 July 1997 and entitled NAVIGATION TECHNIQUE FOR DETECTING MOVEMENT OF NAVIGATION SENSORS RELATIVE TO AN OBJECT. Those disclosures deal with an optical technique for tracking movement that is a component in this present disclosure. Accordingly, U.S. Patent 5,644,139 and U.S. Patent Application S/N 09/052,046 are hereby expressly incorporated herein by reference.

### Background Of The Invention

A conventional computer mouse uses a rolling ball mechanically coupled through wheels or axles to shaft encoders to translate motions of the mouse in orthogonal directions into signals representative of desired movement of a cursor or other indicator in a display generated by a computer. The mechanical interface between the ball and the wheels or axles that turn the shaft encoders is one that is full of compromises. A little bit of dirt or simply sufficient normal wear can render the mechanism, at a minimum, annoying to use, and at worst, altogether unsatisfactory.

It is known for a computer mouse to have an optical tracking mechanism that responds directly to the surface supporting the mouse. Such techniques involve illuminating the surface so that a portion of it can be used to form an image comprising a number of adjacent pixels. The reflectivity and other aspects of that surface can vary greatly, placing a substantial burden on the imaging mechanism. Some sort of control loop is generally necessary to manage illumination. This adds to the complexity, and thus to the expense of the overall device.

It would be desirable to have a method of responding to the motion of the mouse while retaining some or most of the advantages of an optical tracking technique, but still having the lower cost and simplicity associated with shaft encoders.

### Summary Of The Invention

The interior of a mouse or joy stick can be an optically controlled environment, in that ambient levels of illumination can be excluded, the angle, intensity and spectral content of a desired illumination can be established once, and the only surface to be imaged is a part of a ball that is inside that environment. The ball moves for the same reasons as before: either by friction as the mouse is moved across a work surface, or because it is attached to and supports a movable joy stick. But instead of there being shaft encoders having wheels or axles that bear against the ball to sense its motion, the micro-tenure of a small region of the ball is used to form an arbitrary image whose motion is then tracked. The image thus formed changes, of course, as the ball rotates. That is, a portion of the old image passes from view as a new portion emerges. Consecutive images are represented internally within the optical tracking mechanism as arrays of pixels, and the tracking mechanism tolerates the disappearance of some pixels along one side of the field of view whilst other pixel appear from the other side of the field of view. Pattern matching of unchanged pixels determines movement. The pattern described by the new pixels need not have any relationship whatsoever to that represented by the disappearing pixels. That is, the ball need not have either a known or a precision pattern upon its surface; the surface can have an arbitrary micro-texture. Enough pixels in the middle of the array of pixel separate these regions of change that pattern matching can determine the amount and directions of ball motion, the amounts being expressed in pixels. For a computer pointing device this is entirely adequate, and can be scaled by a conventional mouse driver executing on the computer to control the position of a pointer or cursor on the screen.

Any wear and tear to the ball, or dirt that gets on it, simply appears as micro-texture to the optical tracking mechanism. Since the micro-texture is expected to be arbitrary anyway, these phenomenon are of little concern, so long as they do not mechanically interfere with the motion of the ball. This is a definite improvement over the conventional shaft encoder arrangement, where wear and tear or dirt can interfere with the turning of the wheels or axles on the shaft encoders that bear against the ball as it rotates.

### Brief Description Of The Drawings

Figure 1 is a simplified electro-mechanical partial block diagram of a computer mouse constructed to use a tracking optical sensor to determine mouse motion by detecting the motion of the ball in the mouse; and
Figure 2 is a simplified electro-mechanical partial block diagram of a computer joy stick constructed to use a tracking optical sensor to determine stick motion by detecting the motion of the ball.

### Description Of A Preferred Embodiment

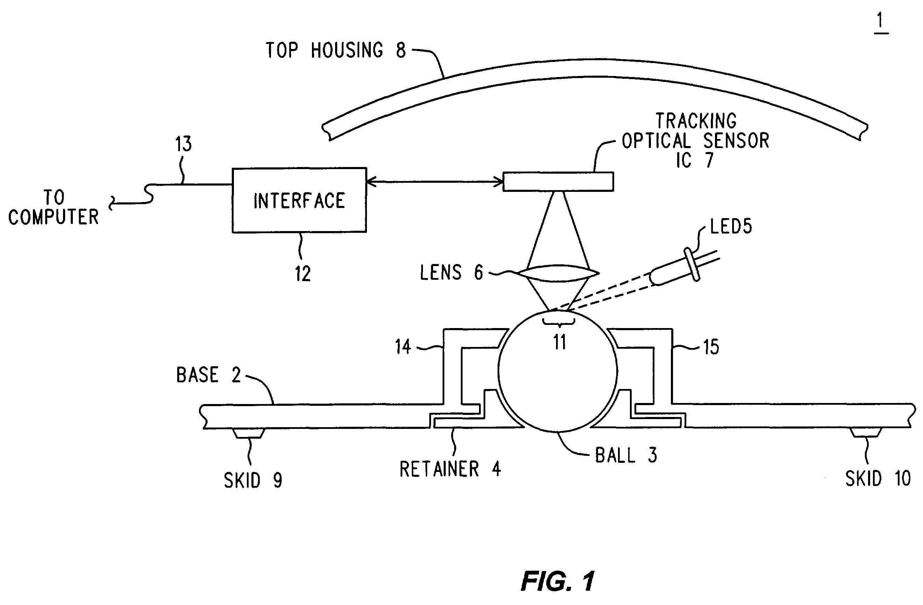

Refer now to Figure 1, wherein is shown a simplified electro-mechanical partial block diagram representation 1 of a computer mouse having a base 2 supporting a (preferably removable) annular retainer 4 within whose center is carried a mouse ball 3. Mouse ball 3 may be a conventional rubber covered steel ball. It may be desirable for the outer surface of the mouse ball 3 to have a deliberately applied micro-texture, either through adding texture to the interior of a mold, a post molding embossing operation, or through abrading the surface with a blasting or tumbling machine. Preliminary experience indicates that such deliberate micro-texturing may well be unnecessary, however. Minute changes in surface height ("roughness") can be micro-texture, as can changes in reflectivity, which in turn could be produced by local differences in material composition or surface shape. The feature size of interest is within the range of 5 to 500 microns.

To continue, ball 3 is further held in place by an internal retaining mechanism, of which individual internal retainers 14 and 15 are representative. The exact nature of the internal retaining mechanism is a matter of design choice, and could range all the way from a plurality of wheels on axles (similar to the design of a mouse with shaft encoders) to an annular orifice attached to, or molded as a part of, the base 2 and disposed above the retainer 4. A further possibility is a plurality of fingers attached to, or molded into, the base 2. It may also be desirable for the internal retaining mechanism to be resilient so as to comply with an upward rise in the mouse ball 3 when the mouse is placed onto a work surface, such as a mouse pad (not shown). In any event, the annular retainer 4 and the internal retaining mechanism cooperate to hold ball 3 in a generally fixed location with very little play, while at the same time allowing it to freely rotate when placed upon a work surface and then moved whilst thereon. In this connection it will be noted that ball 3 extends downward slightly, and the bottom of the base 2 is held away from the work surface by thin low friction skids, or glides, 9 and 10.

An LED 5 (Light Emitting Diode) is disposed proximate the ball 3 so as to (preferably obliquely, to accentuate differences in texture) illuminate a region 11 of the ball 3. A lens or lens system 6 focuses an image of illuminated region 11 onto an array of image sensors (not shown) within a tracking optical image sensor 7, which is preferable an integrated circuit constructed in accordance with the teachings set out in the Patents incorporated above. The size of region 11 is small relative to the radius of ball curvature (say, .050" sq. versus 7/16"), so that no special considerations need be given to focus or distortion; region 11 may be considered to be flat for all practical purposes. It will, of course, be understood that region 11 is whatever portion of ball 3 that is illuminated and whose image is focused onto the tracking optical image sensor 7. As the ball 3 rotates region 11 stays put, but the pattern of micro-texture thus illuminated changes, and is detected as movement.

Tracking optical sensor 7 detects movement of ball 3, and through an interface 12 communicates suitable movement indications via connection 12 to a computer. The particular nature of the connection 12 is a matter of design choice, and may include wired (PS/2, Universal Serial Bus, RS-232, etc.) as well as wireless (infra red or low power RF) modes of information transfer.

Finally, we have also shown a top housing 8, which will be understood to cooperate with the base 2 to form an entire enclosure that not only excludes external ambient light, but that also carries any mouse buttons or other controls (not shown).

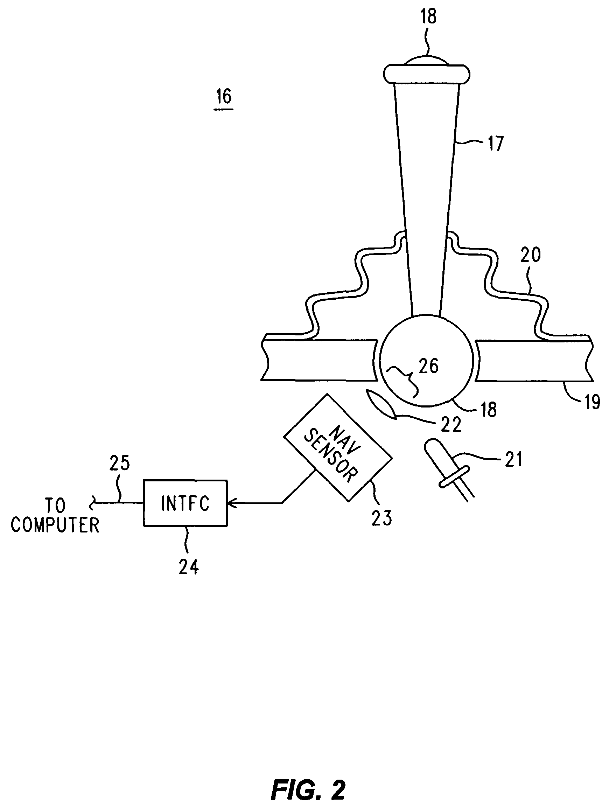

Refer now to Figure 2, wherein is shown a simplified electro-mechanical partial block diagram 16 of a joy stick constructed in accordance with the invention. In particular, a lever or handle 17 (the "stick") extends outward in a generally perpendicular fashion from some top plate or other surface 19 of an enclosure (not itself shown). The lever or handle 17 may include at a distal end a button 18 which when pressed actuates an electrical contact (i.e., functions as a switch). At the opposite end of the lever is affixed a ball 18, which through conventional means is made captive, but is free to pivot in any direction in response to a force applied to the lever 17 (although it may be desirable to prevent rotation about the axis of the lever 17).

A joy stick generally has some sort of centering mechanism to return the lever to its upright, or unactuated, position in the absence of any applied force from the user's hand. In Figure 2 this function is supplied by an elastic boot 20, which also serves the additional function of keeping foreign matter (e.g., dandruff, cookie crumbs) and ambient light out of the interior of the joy stick. Other centering mechanisms are certainly possible, and they include, but are not limited to, extension springs, compression springs, flexible elastic members, spring washers, magnets, weights, pulleys and cables. The centering mechanism is a matter of design choice, if indeed there even is one.

As in the case of the mouse of Figure 1, an LED 21 illuminates a small region 26 on the ball 18. The illumination is preferably at a low angle of incidence, so as to accentuate the micro-texture of the ball 18. Opposite region 26 is a lens or lens system 22 that focuses an image of region 26 onto an array of photo sensors within a navigation sensor 23, which is in turn coupled to a suitable interface 24, and through that by a data transmission path 25 to a computer or other mechanism responsive to a pointing device. It will be appreciated that as the lever or handle 17 is deflected from one position to another the ball 18 rotates in its captivity. Region 26 remains, of course, opposite the lens 22; what changes is the particular pattern of micro-texture whose image is seen by the tracking optical navigation sensor 23, which may be the same as element 7 in Figure 1. These changes in pattern are detected and sent, in a conventional known manner, to the using computer (or other mechanism) as pointing information.

Finally, and although we have not shown it explicitly, it will nevertheless be readily understood that the LED 21, lens 22 and navigation sensor 23 are within an enclosed portion of the joy stick, and that ambient light is excluded.

It should also be noted that not all joy sticks are used as pointing devices in computer systems. Some joy sticks are used as input mechanisms for systems that control the position or action of an object remote from the joy stick, as in "remote control". An example would be a radio controlled model airplane, car or boat. Another example would be the position of a cutting bit in machine tool. It is clear that the technique of optically tracking micro-texture on a spherical surface within a joy stick, as disclosed herein, is also applicable to these sorts of remote control applications.

## Claims

1. A method of controlling with a mechanical motion the position of a cursor or other pointer displayed upon a computer screen or the like, the method comprising the steps of:
supporting (4, 14, 15) a portion of a spherical surface (3) having a micro-texture thereon such that the spherical surface is captive but remains free to rotate;
coupling a mechanical motion to the spherical surface that causes the spherical surface to rotate;
illuminating (5) the micro-texture of a portion of the spherical surface;
focusing (6) an image of the illuminated micro-texture onto an optical position tracking circuit (9) that produces position control signals indicative of changes in the relative position of a pattern in the micro-texture of the image as the spherical surface rotates; and
coupling (13) the position control signals to a device that responds thereto by changing the position of a cursor or other pointer.

2. A method of controlling with a mechanical motion an action of an object remote from the mechanical motion, the method comprising the steps of:
supporting (4, 14, 15) a portion of a spherical surface (3) having a micro-texture thereon such that the spherical surface is captive but remains free to rotate;
coupling a mechanical motion to the spherical surface that causes the spherical surface to rotate;
illuminating (5) the micro-texture of a portion of the spherical surface;
focusing (6) an image of the illuminated micro-texture onto an optical position tracking circuit (7) that produces position control signals indicative of changes in the relative position of a pattern in the micro-texture image as the spherical surface rotates; and
coupling (13) the position control signals to a device that responds thereto by controlling the action of an object remote from the mechanical motion.

3. Pointing apparatus for a computer or the like comprising:
a spherical micro-textured surface (3, 18) captively mounted and coupled to receive a mechanical motion that causes the spherical micro-textured surface to rotate;
a source of illumination (5, 21) directed at a portion of the spherical micro-textured surface; and
an optical position tracking circuit (7,23) disposed proximate the illuminated portion of the spherical micro-textured surface and optically coupled thereto, the optical position tracking circuit producing position control signals (13, 25) indicative of changes in the relative position of a pattern in the micro-texture as the spherical micro-textured surface rotates.

4. Pointing apparatus as in claim 3 wherein the apparatus is a computer mouse (1) and the coupling to receive a mechanical motion is frictional contact between an exposed portion of the spherical micro-textured surface and a generally flat work surface upon which the mouse is placed.

5. Pointing apparatus as in claim 3 wherein the apparatus is a joy stick (16) that further comprises a lever (17) attached at one end to the spherical micro-textured surface, and further wherein the mechanical motion is produced by moving the lever.
